# EUROPEAN PATENT APPLICATION

(11) **EP 4 644 205 A1**
(43) Date of publication of application: **05.11.2025**
(21) Application number: 24216518.1
(22) Date of filing: 29.11.2024
(51) Int. Cl.: B60W 50/14

(54) **METHOD FOR CONTROLLING AN OUTPUT OF A NOTIFICATION TO A DRIVER OF A VEHICLE, A DATA PROCESSING APPARATUS, A COMPUTER PROGRAM, A COMPUTER-READABLE STORAGE MEDIUM, AND A VEHICLE**

(71) Applicant: Volvo Car Corporation, 405 31 Göteborg (SE)
(72) Inventor: ORESTEN, Jonas, 40531 Göteborg (SE)
(74) Representative: Maiwald GmbH

(57) **Abstract**

The disclosure relates to a method for controlling an output of a notification to a driver of a vehicle, the method comprising: obtaining first data indicative of the notification to the driver of the vehicle; obtaining second data indicative of a driving situation; and based of on the second data, delaying the output of the notification to the driver of the vehicle. The disclosure further relates to a data processing apparatus, a computer program, and a computer-readable storage medium, each comprising means for carrying out the steps of the method. Additionally, the disclosure relates to a vehicle comprising the data processing apparatus.

## Description

### TECHNICAL FIELD

The present disclosure relates to a method for controlling an output of a notification to a driver of a vehicle. The present disclosure further relates to a data processing apparatus, a computer program, and a computer-readable storage medium, each comprising means for vehicle carrying out the steps of the method. Additionally, the present disclosure relates to a vehicle comprising the data processing apparatus.

### BACKGROUND ART

The modern vehicles provide to a driver different kinds of data through the vehicle's HMI, which, for example, may be data related to traffic, safety enhancement, paired external devices (for example a mobile phone), and/or entertainment, etc. However, there may be situations in which the driver needs to be especially focused on the driving task and may be overwhelmed and/or distracted by output of the data. This can be dangerous for driving safety.

### SUMMARY

It is therefore an objective of the present disclosure to improve driving safety.

The problem is at least partially solved or alleviated by the subject matter of the independent claims of the present disclosure, wherein further examples are incorporated in the dependent claims.

According to a first aspect, there is provided a method for controlling an output of a notification to a driver of a vehicle. The method of the first aspect comprises the following steps: obtaining first data indicative of the notification to the driver of the vehicle; obtaining second data indicative of a driving situation; and, based on the second data, delaying the output of the notification to the driver of the vehicle if the required conditions are fulfilled, i.e. if the notification is of non-urgent nature and the current driving task is identified as a critical traffic situation where a high level of driver focus is necessary. Such situations may include overtaking maneuvers, driving in steep curves, approaching an object with high relative velocity, etc.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

The notification to the driver may be any kind of notifications that are output in a vehicle to a driver of the vehicle. For example, a notification output to the driver may comprise audio, image(s), video, and/or text. The output of the notification, however, may disturb the driver's attention while driving. This may be acceptable in routine driving situations, but could bring a potential safety risk in more demanding driving situations. Hence, the present disclosure allows delaying the output of the notification to the driver of the vehicle when data indicative of a corresponding driving situation is received. In this way, safe driving of the vehicle can be ensured. Additionally, different devices that are paired with the vehicle may cause notification outputs through an appropriate interface such as the vehicle's human-machine interface (HMI), for example. In case of a driving situation, in which an output of a notification may disturb driver's attention, the present disclosure efficiently and effectively avoids outputting of the notifications from any one of the different devices such that the driver of the vehicle may cope with the driving situation without being distracted by the output of the notifications. The notifications, the output of which is delayed, may be non-urgent notifications that are not related to the specific driving situation and/or that provide general information without reference to the driving situation.

According to an example, the first data, indicative of the notification, may be obtained from: a device or system that is separate from the vehicle, for example a mobile phone; a device or a system of the vehicle itself; and/or the driving situation may be a critical driving situation.

According to an example, the method may comprise obtaining third data indicating that the vehicle is not in the driving situation indicated in the second data and/or indicating that the driving situation indicated in the second data is over. According to an example, the output of the notification may be caused upon obtaining the third data and/or the delaying of the output of the notification to the driver of the vehicle may be completed upon obtaining the third data. The obtaining of the third data provides an reliable signal that the respective driving situation has been managed by the driver. It is ensured that the output of the notification will not disturb driver's attention when handling the driving situation.

According to an example, the delaying of the output of the notification may comprise delaying it by a predefined time period; and/or the delaying of the output of the notification output may comprise inserting the notification in a queue, configured to maintain notifications for outputting to the driver of the vehicle. The outputting of the notification may be executed as soon as the critical traffic situation has passed. In this way, it is ensured that the information on the notifications to be output is not lost, only momentarily suppressed. Furthermore, an effective and efficient withholding of the notifications is ensured.

According to an example, the method may comprise monitoring driving situations of the vehicle. For example, the monitoring of driving situations of the vehicle may comprise: monitoring critical driving situations of the vehicle; and/or monitoring environment surrounding the vehicle and/or monitoring at least one state of the vehicle itself. The monitoring of the driving situations ensures that in case of each relevant driving situation, the delaying of the notification(s) will be performed.

According to an example, the monitoring of driving situations of the vehicle may be executed by using at least one of the following: information obtained from at least one sensor of the vehicle; information indicative of surrounding of the vehicle; information indicative of a driving route of the vehicle; information indicative of motion of the vehicle relative to surrounding objects; information obtained from at least one system for detecting critical driving situations of the vehicle; information obtained from at least one system for collision avoidance; information indicative of driving state of the vehicle such as acceleration, deceleration, steering angle, yaw etc; and/or information obtained from cloud based map data.

The use of the different information supports reliable detecting of driving situation(s), in which the delaying of the notification(s) supports the driver to manage the driving situation(s).

Thus, according to an example, the second data may be a result of the monitoring of the critical driving situations. When a critical driving situation is detected by the driving situation monitoring, the second data indicative of the critical driving situation may be obtained and the delaying of the output of notifications to the driver of the vehicle may be started. As mentioned, notifications output of which is delayed may be notifications that are not related to the driving situation and/or that provide general information without reference to the driving situation. The driver of the vehicle may thus manage the critical situation without being disturbed by notifications that the driver do not require for the critical situation management and that, rather, would rather disturb driver's attention on the critical situation. In this way, a safe driving of the vehicle may be supported. The notifications may be output later, e.g. upon the completed management of the critical situation.

According to an example, the second data indicative of a driving situation may be obtained if: a longitudinal distance to an object in surrounding of the vehicle is below a first threshold value and the vehicle is driving; the longitudinal distance to an object in surrounding of the vehicle is below a second threshold value and a driving speed of the vehicle is above a third threshold value; a lateral distance to an object in surrounding of the vehicle is below a fourth threshold value and the vehicle is driving; the lateral distance to an object in surrounding of the vehicle is below a fifth threshold value and the driving speed of the vehicle is above a sixth threshold value; the vehicle is approaching an object with a relative velocity higher than a seventh threshold value and/or an estimated time-to-collision is below an eighth threshold value; the vehicle is driving in a curve that involves steering with a steering angle above a ninth threshold value and/or yaw forces exceed a tenth threshold value; the vehicle is about to enter, entering, or in the process of driving through a section of a road, requiring an adaptation of the speed of the vehicle for entering or driving through the section of the road; and/or the vehicle is driving a driving maneuver such as overtaking maneuver or any other driving maneuver, for example. The yaw forces are well known and may comprise lateral yaw forces for example.

According to an example, the adaptation of the speed of the vehicle may comprise: increasing the speed of the vehicle; increasing the speed of the vehicle by at least a first amount of speed; decreasing the speed of the vehicle; or decreasing the speed of the vehicle by at least a first amount of speed.

According to an example, the section of the road may comprise: an intersection; a junction; an on-ramp; an off-ramp; a start of a traffic jam and/or a construction site on the road; an end of the traffic jam and/or the construction site on the road; or a curve of the road.

The above-list is an exemplary list of driving situations, in which an increased attention of the driver on the (current) driving situation is required and in which the output of notifications, which are not helpful for managing the respective situations but will rather disturb driver's attention, may be delayed for ensuring a successful handling of the driving situations. The present disclosure may be correspondingly implemented with regard to any other driving situation (e.g., critical driving situation) if desired.

According to a second aspect, there is provided a data processing apparatus comprising means for carrying out the steps of the method of the first aspect.

According to a third aspect, there is provided a computer program comprising instructions which, when the program is executed by a computer, cause the computer to carry out the steps of the method of the first aspect.

According to a fourth aspect, there is provided a computer program element for operating a haptic system, which, when being executed by a processing unit, is adapted to carry out the steps of the method of the first aspect.

According to a fifth aspect, there is provided a computer-readable storage medium comprising instructions which, when executed by a computer, cause the computer to carry out the steps of the method of the first aspect.

According to a sixth aspect, there is provided a vehicle comprising the data processing apparatus of the second aspect.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows an environment, in which a method for controlling an output of a notification to a driver of a vehicle may be executed according to an example of the present disclosure;
- Figure 2A: shows an exemplary delaying of an output of a notification according to an example of the present disclosure;
- Figure 2B: shows an exemplary delaying of an output of a notification according to an example of the present disclosure;
- Figure 3: shows steps of a method for controlling an output of a notification to a driver of a vehicle according to an example of the present disclosure;
- Figure 4: shows implementation of delaying output of a notification according to an example of the present disclosure; and
- Figure 5: shows an arrangement of a data processing apparatus according to an example of the present disclosure.

### DETAILED DESCRIPTION

The Figures are merely schematic representations and serve only to illustrate examples of the disclosure. Identical or equivalent elements are in principle provided with the same reference signs.

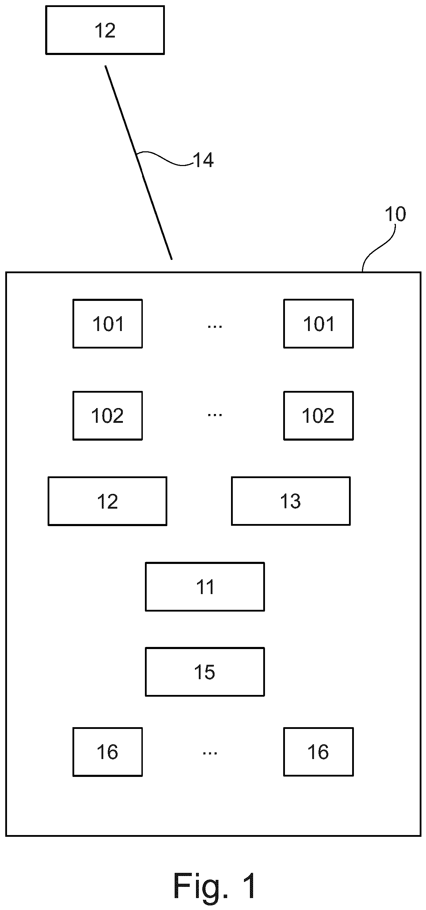

Figure 1 shows an environment, in which a method for controlling an output of a notification to a driver of a vehicle 10 may be executed according to an example of the present disclosure.

Different kinds of notifications may be output to the driver of the vehicle 10 and the present disclosure is not limited to one or more particular kinds of notifications. Thus, the notifications may be any kind of notifications. For example, a notification output to the driver of the vehicle 10 may comprise audio, image(s), video, and/or text. Further, a notification output to the diver of the vehicle 10 may be related to traffic, safety enhancement, and/or entertainment, for example.

Thus, at the vehicle 10, data indicative of different kinds of notification to the driver of the vehicle 10 may be obtained. The vehicle 10 comprises a data processing apparatus 11, which is arranged for obtaining the data indicative of a notification to the driver of the vehicle 10. Generally, obtaining of data indicative of a notification to the driver of the vehicle 10 (e.g., by the data processing apparatus 11) means that a corresponding output of the notification should be performed or caused (e.g., by the data processing apparatus 11).

The data indicative of the notification may comprise data presented in the notification or may comprise a part of data presented in the notification, wherein the rest (i.e. other part) of data presented in the notification may be stored in a storage device, from which it may obtained when outputting the notification to the driver. The data indicative of the notification may further comprise an indication to the data that characterizes the content of the notification, while data that characterizes the content of the notification may be stored in a storage and may be obtained from the storage, based on the indication, for outputting. Further, the data indicative of the notification may indicate the kind of the notification to be output. In some cases, the data indicative of the notification may indicate a standardized notification (e.g., a particular kind of warning or other standardized information) to be output without indicating or comprising a certain notification content. In some cases, the data indicative of the notification may indicate how and/or by use of which output device the notification should be output.

Generally, notifications that are output by the vehicle 10 may have different sources. The present disclosure is not limited to one or more particular notification sources. Correspondingly, the information provided with the notification and/or the way on how the notification is to be output may depend on the source of the notification, as well known by the skilled person(s).

A source of a notification may be, for example, at least one device or system 12 that is separate from the vehicle 10. The device or system 12 that is separate from the vehicle 10 may be communicatively connected or attached to the vehicle 10. The communicative connection or attachment may be implemented in any one of well-known ways and/or by use of any one of appropriate future technologies. The communicative connection or attachment may be, for example, wired or wireless. Further, any one of (well-known or future) communication technologies may be used. The communication technologies may comprise, for example, radio frequency (RF), cellular networks, satellite communication, Bluetooth, WiFi, NFC, Zigbee, etc. The present disclosure is not limited to a particular implementation of the communicative connection or attachment.

The device or system 12 may be, for example, a remote system or device such as a server that is communicatively connected to the vehicle 10 or to the data processing apparatus 11 respectively for providing the data indicative of the notification to be output. In Figure 1, the remote system or device 12 is shown outside the vehicle 10 and the communication connection between the remote system or device 12 and the vehicle 10 or to the data processing apparatus 11 respectively is indicated by reference sign 14. The remote device or system 12 may provide, for example, data indicative of notification(s) that comprise or are associated with traffic relevant information, vehicle-to-everything (V2X) information, global positioning system, GPS, related information, and/or entertainment information etc. The present disclosure allows communication connections 14 to any appropriate remote system or device 12, arranged for providing data indicative of a notification to the driver of the vehicle 10, and is not limited to particular one or more remote systems or devices 12.

A device or system 12 that is separate from the vehicle 10 may be located also at or in the vehicle 10, while at the same time being not a part of the vehicle 10 but being (e.g., removably) connected or attached to the vehicle 10 by any one of well-known appropriate means and being communicatively connected or attached to the vehicle 10 as indicated above by any one of well-known appropriate means. Said device 12 may provide any kind of notifications to the driver of the vehicle 10 for outputting to the driver of the vehicle 10. The present disclosure supports obtaining data indicative of a notification for outputting to the driver of the vehicle 10 from any one of appropriate device or system 12, located at or in the vehicle 10 and being correspondingly connected or attached to the vehicle 10.

Thus, the data processing apparatus 11 may obtain data indicative of a notification to the driver of the vehicle 10 from any one of devices or systems 12 separate from the vehicle 10 (e.g., as described above) and arranged for providing data indicative of at least one notification for output to the driver of the vehicle 10.

A source of a notification may be further, for example, at least one device or system 101 of the vehicle 10 itself. The at least one device or system 101 of the vehicle 10 may be any one of the devices or systems of the vehicle 10 that may cause notification output. The present disclosure is not limited to one or more particular devices or systems 101 of the vehicle 10. For example, the at least one device or system 101 of the vehicle 10 may be an infotainment system. The infotainment system 101 may be arranged for providing data indicative of notifications that are associated with navigation (e.g., navigation instructions), incoming phone calls and messages, media playback information, and/or general system alerts, and/or any other data provided by an infotainment system 101. Further, the at least one device or system 101 of the vehicle 10 may be a driver assistance system. The driver assistance system 101 may be arranged for providing data indicative of notifications that are associated with collision warnings, lane departure warnings, blind spot alerts, cross-traffic alerts, and/or other well-known data provided by a driver assistance system 101. The at least one device or system 101 of the vehicle 10 may also provide data/information associated with components of the vehicle 10 such as low fuel warnings, maintenance reminders, tire pressure alerts, and/or other well-known appropriate data. Further, the at least one device or system 101 of the vehicle 10 may be also a notification center of the vehicle that aggregates various alerts and/or messages for the driver. The corresponding notification centers 101 of vehicles are well-knows. Thus, the at least one device or system 101 of the vehicle 10 may be any one of devices or systems of the vehicle 10 providing notifications to the driver of the vehicle 10.

Furthermore, a source of a notification may be also a mobile device 13. Provision of notifications based on corresponding data from a mobile device 13 such as mobile phone or other mobile device is well-known. The present disclosure may relate to any data indicative of a notification to the driver of the vehicle 10 obtained from the mobile device 13 and is not limited to specific notification related data obtained from a mobile device 13 for output to the driver of the vehicle 10. Examples of data that is obtained from a mobile device 13 and that is indicative of a notification to the driver of the vehicle 10 may include, for example, incoming calls, incoming messages, navigation related messages, entertainment related messages etc.

In response to obtaining data indicative of a notification to the driver of the vehicle 10, a corresponding notification may be output via at least one output device or system 102 of the vehicle 10. The at least one output device or system 102 may be any one of output devices or systems of the vehicle 10 arranged for outputting notifications to the driver of the vehicle 10. As indicated above, the notifications may comprise audio, image(s), video, and/or text. Consequently, the at least one output device or system 102 is arranged for outputting audio, image, video, and/or text notifications to the driver of the vehicle 10.

According to the disclosure, the data processing apparatus 11 may further obtain data indicative of a driving situation. The driving situation may be a current driving situation. The determination of the (current) driving situation may be done in real time. Further, the driving situation may be, for example, a critical driving situation. Then, based on the obtained data indicative of the driving situation, the output of the notification to the driver of the vehicle 10 may be delayed. For example, the data processing apparatus 11 causes the delaying of the output of the notification.

The obtaining of the data indicative of the driving situation and the delaying of the output of the notification will be explained in more detail in the following.

The vehicle 10 may comprise a driving situation monitoring device 15. In the example of Figure 1, the data processing apparatus 11 may obtain the data indicative of a driving situation of the vehicle 10 from a driving situation monitoring device 15. The driving situation monitoring device 15 may be a part of the data processing apparatus 11 or may be separate from the data processing apparatus 11. In the latter case, i.e. when the driving situation monitoring device 15 is separate from the data processing apparatus 11, the driving situation monitoring device 15 may be communicatively connected to the data processing apparatus 11 such that the driving situation monitoring device 15 may provide data indicative of a driving situation to the data processing apparatus 11. The communicative connection may be established by any appropriate communication means well-known to the skilled person. The communicative connection may be wired or wireless connection. Further, any one of (well-known or future) communication technologies may be used. The communication technologies may comprise, for example, radio frequency (RF), cellular networks, satellite communication, Bluetooth, WiFi, NFC, Zigbee, etc. The present disclosure is not limited to a particular implementation of the communicative connection. When the driving situation monitoring device 15 is a part of the data processing apparatus 11, it may be said that the data processing apparatus 11 itself performs the operations of the driving situation monitoring device 15.

The driving situation monitoring device 15 is arranged for monitoring driving situation(s) of the vehicle 10. For example, the driving situations comprise critical driving situations. Thus, the driving situation monitoring device 15 may monitor critical driving situations of the vehicle 10. The monitoring of the driving situations of the vehicle 10 may comprise monitoring environment surrounding the vehicle 10 and/or monitoring at least one state of the vehicle 10 itself.

The monitoring of the driving situations may be executed by utilizing information from different components and/or systems 16 inside and/or outside the vehicle 10, which may provide information on environment surrounding the vehicle 10 and/or at least one state of the vehicle 10. The components and/or systems 16 may comprise, for example, at least one sensor and/or at least one camera of the vehicle 10. Further, the components and/or systems 16 may comprise at least one component or system 16 providing vehicle-to-everything (V2X) information, global positioning system (GPS) information, and/or navigation-related situation. The components and/or systems 16 may also comprise artificial intelligence (AI) based components and/or systems that are arranged for analyzing collected data in real-time to detect indications on critical driving situations. Generally, any one of appropriate components and/or systems 16 capable of providing driving situation relevant information may be used according to the present disclosure and the present disclosure is not limited to one or more specific components and/or systems 16.

Thus, the driving situation monitoring device 15 may receive from at least one of the components and/or systems 16 information related to the driving situation of the vehicle 10. In view of the aforesaid, the information, which the driving situation monitoring device 15 may receive, may comprise at least one of the following: information obtained from at least one sensor 16 of the vehicle 10; information indicative of the surrounding of the vehicle 10; information indicative of a driving route of the vehicle 10; information indicative of motion of the vehicle 10 relative to surrounding objects (e.g., surrounding vehicles and/or objects on the roadside or on the road, etc.); information obtained from at least one further system 16 for detecting critical driving situations of the vehicle 10; information obtained from at least one system 16 for collision avoidance; information indicative of driving state of the vehicle 10; and/or information obtained from cloud based map data. The present disclosure allows the use of any appropriate information enabling determination of vehicle's 10 driving situation.

Further, based on the received information related to the driving situation of the vehicle 10, the driving situation monitoring device 15 may determine the (current) driving situation of the vehicle 10. The determination of the (current) driving situation may be performed in real-time. For determining the (current) driving situation, any one of appropriate known methods for determining vehicle's 10 driving situation may be used.

The data processing apparatus 11 may thus obtain the data indicative of the (current) driving situation from the monitoring device 15. Based on the data indicative of the (current) driving situation, the data processing apparatus 11 may decide to delay the output of the notification to the driver. This, may be, for example, the case when the (current) driving situation is a critical driving situation and the output of the notification to the driver may distract or interfere with the driver's ability to cope with the critical situation.

For example, a corresponding driving situation may be present and the data processing apparatus 11 may obtain the second data indicative of the driving situation (from the monitoring device 15) if a longitudinal distance to an object in surrounding of the vehicle 10 (e.g., surrounding vehicle and/or object on the road, etc.) is below a first threshold value and the vehicle 10 is driving. The first threshold may be a threshold for a minimal longitudinal distance that may be present between the vehicle 10 and the object.

Further, a corresponding driving situation may be present and the data processing apparatus 11 may obtain the second data indicative of the driving situation (from the monitoring device 15), for example, when the longitudinal distance to an object in surrounding of the vehicle 10 (e.g., surrounding vehicle and/or object on the road, etc.) is below a second threshold value and a driving speed of the vehicle 10 is above a third threshold value. The second threshold may be a threshold for a minimal longitudinal distance that may be present between the vehicle 10 and the object in view of the driving speed of the vehicle 10. According to an example, the second threshold may have the same value as the first threshold or may be larger than the first threshold due to the driving speed taken into account. According to an example, the second threshold value may be determined in view of the longitudinal distance and the driving speed, e.g. by considering an estimate of a potential collision between the vehicle 10 and the object. For example, the second threshold value may be determined such that the potential collision may be avoided. The third threshold value may be a maximal threshold value of the speed that the vehicle 10 should have in view of the longitudinal distance to the object. Also the third threshold value may be determined in view of the longitudinal distance and the driving speed, e.g. by considering the estimate of the potential collision between the vehicle 10 and the object. For example, the third threshold value may be determined such that the risk of collision, caused by distraction from a notification, is lowered.

Furthermore, a corresponding driving situation may be present and the data processing apparatus 11 may obtain the second data indicative of the driving situation (from the monitoring device 15), for example, when a lateral distance to an object (e.g., surrounding vehicle and/or object on the roadside, etc.) in surrounding of the vehicle 10 (e.g., surrounding vehicle and/or object on the roadside or on the road, etc.) is below a fourth threshold value and the vehicle 10 is driving. The fourth threshold value may be a minimal lateral distance to the object that the vehicle 10 should have when driving.

Moreover, a corresponding driving situation may be present and the data processing apparatus 11 may obtain the second data indicative of the driving situation (from the monitoring device 15), for example, when the lateral distance to an object in surrounding of the vehicle 10 (e.g., surrounding vehicle and/or object on the roadside, etc.) is below a fifth threshold value and the driving speed of the vehicle 10 is above a sixth threshold value. The fifth threshold may have the same value as the fourth threshold value. According to an example, the fifth threshold value may be determined in view of the lateral distance and the driving speed, e.g. by considering an estimate of a potential collision between the vehicle 10 and the object. For example, the fifth threshold value may be determined such that the risk of collision, caused by distraction from a notification, is lowered.

. The sixth threshold value may be a maximal threshold value of the speed that the vehicle 10 should have in view of the lateral distance to the object. Also the sixth threshold value may be determined in view of the lateral distance and the driving speed, e.g. by considering the estimate of the potential collision between the vehicle 10 and the object. For example, the sixth threshold value may be determined such that the risk of collision, caused by distraction from a notification, is lowered.

Further, a corresponding driving situation may be present and the data processing apparatus 11 may obtain the second data indicative of the driving situation (from the monitoring device 15), for example, if the vehicle 10 is approaching an object with a relative velocity higher than a seventh threshold value and/or an estimated time-to-collision is below an eighth threshold value.

Furthermore, a corresponding driving situation may be present and the data processing apparatus 11 may obtain the second data indicative of the driving situation (from the monitoring device 15), for example, if the vehicle 10 is driving in a curve that involves steering with a steering angle above a ninth threshold value and/or yaw forces exceed a tenth threshold value.
Moreover, a corresponding driving situation may be present and the data processing apparatus 11 may obtain the second data indicative of the driving situation (from the monitoring device 15), for example, when the vehicle 10 is about to enter, entering, or in the process of driving through a section of a road, requiring an adaptation of the speed of the vehicle 10 for entering or driving through the section of the road. The section of the road may comprise, for example: an intersection; a junction; an on-ramp; an off-ramp; a start of a traffic jam and/or a construction site on the road; an end of the traffic jam and/or the construction site on the road; or a curve of the road. The present disclosure may relate also to other corresponding sections of the road and is not limited to the above-listed road sections.

According to the present disclosure, the adaptation of the speed of the vehicle 10 may comprise, for example, the following: increasing the speed of the vehicle 10; increasing the speed of the vehicle 10 by at least a first amount of speed; decreasing the speed of the vehicle 10; or decreasing the speed of the vehicle 10 by at least a first amount of speed. The amounts of the increase or decrease of the speed of the vehicle 10 may depend on the current speed of the vehicle 10 and the allowed speed for the section of the road. Their determination will be obvious to the skilled person. For example, the amounts of the increase or decrease of the speed may correspond to or may be associated with the difference between the current speed of the vehicle 10 and the allowed speed for the section of the road. Also here, the section of the road may comprise, for example: an intersection; a junction; an on-ramp; an off-ramp; a start of a traffic jam and/or a construction site on the road; an end of the traffic jam and/or the construction site on the road; or a curve of the road. The present disclosure may relate also to other corresponding sections of the road and is not limited to the above-listed road sections.

Additionally, a corresponding driving situation may be present and the data processing apparatus 11 may obtain the second data indicative of the driving situation (from the monitoring device 15), for example, when the vehicle 10 is driving a driving maneuver. Different kinds of driving maneuvers may occur, and the term of driving maneuver is well-known. Mastering these maneuvers is crucial for safe driving as they enhance a driver's ability to handle various road situations, including, for example, parking, navigating tight spaces, and/or responding to unexpected events. Further concrete examples of maneuvers may be, for example, parallel parking, reverse or bay parking, pulling up on the right, emergency stop, turning in a road (e.g., three-point turn), reversing around a corner, etc. The present disclosure is not limited to one or more particular maneuvers and may relate to any one of possible driving maneuvers.

The driving situations listed above as driving situations, data indicative of which may be provided to the data processing apparatus 11, are some of possible critical driving situations, in which the driver of the vehicle 10 has to focus on the driving situation and should be not disturbed by notifications that are not relevant for the driving situation and output of that may, therefore, be delayed. The present disclosure is not limited to the above-listed driving situations and is applicable to any one of further possible (e.g., critical and/or safety relevant) driving situations that may occur during the driving the vehicle 10.

According to the present disclosure, based on the obtained data indicative of the driving situation, the output of the notification to the driver of the vehicle 10 may be delayed. Correspondingly, the data processing apparatus 11 may cause the delaying of the output of the notification.

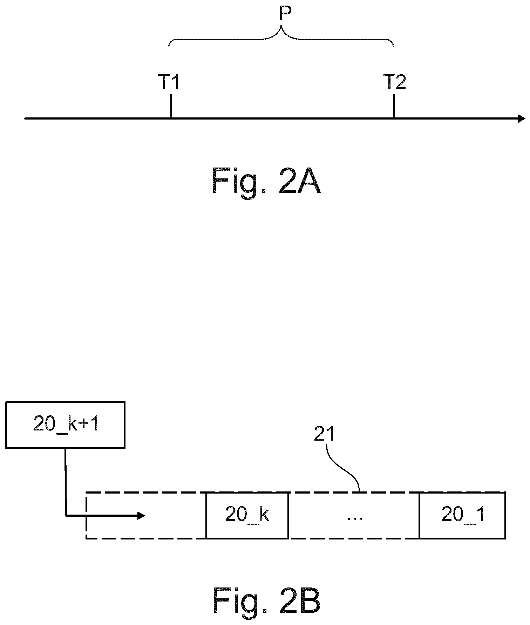

The delaying of the output of the notification may comprise delaying the output by a predetermined time period. This approach of delaying may be used, for example, if the duration of the driving situation may be estimated. In this case, the predetermined time period may correspond to the estimated duration of the driving situation. Further, also a generally pre-set time period for delaying an output of the notification may be implemented, for example. Figure 2A visualizes an exemplary delaying of the output of the notification. The horizontal arrow visualizes a time axis. T1 represents a time point, at which the notification would be output without a delay (i.e., when the driving situation had not occurred). However, due to the presence of the driving situation, the output of the notification is delayed by the predetermined time period P. The actual output of the notification is performed at time point T2, upon the time period P has expired.

Further, the delaying of the output of the notification output may comprise inserting the notification in a queue configured to maintain notifications for outputting to the driver of the vehicle 10. This implementation is exemplary visualized in Figure 2B.

Figure 2B shows an exemplary queue 21. Generally, a queue (such as the queue 21 of Figure 2B) is a well-known tool in the area of computer science. A queue (such as the queue 21 of Figure 2B) maintains its entries in a sequence. New entries (such as a notification, for example) are added to the end of the sequence. For processing, entries are taken from the front of the queue and processed, wherein taking an entry for processing from the front of the queue means also the deletion of the entry from the queue.

The present disclosure utilizes the well-known queue tool for delaying the output of a notification. The queue 21 of Figure 2B exemplary comprises a set of notifications 20_1 to 20_k, wherein k may be greater than or equal to zero. When it is decided to delay a notification, the notification is added as a new entry 20_k+1 to the end of the queue 21. The notifications are processed (e.g., output) in a sequential order by starting with the notification in the first entry 20_1 in the front of the queue 21. Thus, for processing, the notification of the first entry 20_1 of the queue 21 is taken from the queue 21, wherein taking the notification of the first entry 20_1 of the queue 21 from the queue 21 means its deletion in the queue 21 such that the subsequent notifications of the subsequent entries of the queue move up. Thus, it will take some time until the notification of the entry 20_k+1 will be processed, i.e., output respectively. The output of the notification in the entry 20_k+1 of the queue 21 will be delayed by the waiting time in the queue 21 until the notification is in the first entry at the front of the queue 21 and is taken from the queue 21 for outputting (by at least one of the at least one output device or system 102) to the driver of the vehicle 10.

By delaying the output of a notification when a particular driving situation occurs, the driver of the vehicle 10 is not disturbed by notifications and can concentrate on the driving situation. The notification can be issued with delay, i.e. once the driving situation has been dealt with.

According to the present disclosure, the data processing apparatus 11 may obtain data indicating that the vehicle 10 is not in the driving situation indicated previously by the driving situation monitoring device 15. For example, the driving situation monitoring device 15 (monitoring the driving situations of the vehicle 10 continuously and in real-time) may determine that the driving situation, which caused the delay of the notification, is over. The driving situation monitoring device 15 may provide a corresponding data indicating that the vehicle 10 is not in said driving situation and/or indicating that said driving situation is over. By providing a corresponding indication to the data processing apparatus 11 it is ensured that the driver in any case will be not disturbed in the driving situation. The output of the notification may, for example, be delayed until a corresponding indication is obtained by the data processing apparatus 11. Thus, the output of the notification may be caused upon obtaining the indication and/or the delaying of the output of the notification to the driver of the vehicle 10 may be completed upon obtaining the indication.

Thus, by implementing the present disclosure, a safe driving during particular driving situations such as critical driving situations may be supported by delaying notifications to be output to the driver of the vehicle 10. As a consequence, notifications that are not relevant for the driving situation will not be allowed to distract the driver.

An audible and/or visual alert, even if it is designed to be non-intrusive, may capture the attention of the driver to some extent. The purpose of a notification is to capture the driver's attention. For example, if a mobile device 13 such as phone receives an incoming message, a notification comprising a sound and a content of the message will be output. The sound will be played by a corresponding output device or system 102 of the vehicle 10 and the content of the message will be displayed by a corresponding output device of system 102 of the vehicle 10. When this happens, a reasonable reaction from the driver is to glance over to the display device or system 102 to check the notification. Even if the driver chooses to not proceed to read/hear the output of the notification, there will be a time-frame of a few seconds where the driver's attention is more focused on the output by the at least one output device or system 102 than on the road.

Normally, this may not be a big concern. However, if the notification happens to occur while the driver is in the middle of a complex or critical driving situation, these few seconds of distraction could become a safety issue. A notification from the mobile device 15 such as the phone is not driving-related (i.e., is not related to the complex or critical driving situation), hence it is unnecessary and sometimes even inappropriate to pass the notification on to the driver unfiltered.

For example, if another vehicle in front of the driver's vehicle 10 decelerates, this might not be noticed by the driver until he looks up from the display 102 again. And by then, the driver of the vehicle 10 has lost valuable time that might be needed to perform a braking maneuver to avoid collision with the another vehicle in front.

Similarly, if a data indicative of a notification to the driver of the vehicle 10 is obtained while entering/driving in a curve, especially at high speed, the driver might for a moment lose track of the road and begin to drift out of lane/road. Even if a full lane departure does not take place, the driver can get spooked once he looks up again and notices he's not on the expected trajectory and overcompensate, which can cause secondary safety issues.

As explained above, also other demanding (i.e. critical and/or safety-relevant) situations such as intersections, junctions, highway on-ramp, etc. may occur during the driving of the vehicle 10 and may can cause safety problems. The present disclosure allows the driver to handle the driving situations without being disturbed by notifications that are not driving relevant and/or that are not associated with the (current) driving situation (e.g., a critical and/or safety-relevant driving situation) to be handled by the driver of the vehicle 10. As mentioned above, also other sources 101, 12, 13 of the notifications may cause output of notifications that are not driving relevant and/or that are not associated with the (current) driving situation (e.g., a critical and/or safety-relevant driving situation) and that would disturb the driver of the vehicle 10 when handling the driving situation. The present disclosure allows delaying said notifications such that the driver may focus on the driving situation.

The present disclosure takes care of the issue on the vehicle 10 side instead of the side of the respective source 101, 12, 13 of a notification such as the above-mentioned phone 13. The advantage of that is that the vehicle 10 can act in a more adaptive and intelligent way depending on the driving/traffic situation, something that the respective source 101, 12, 13 of a notification such as the above-mentioned phone 13 cannot do. In case of the phone 13, for example, the driver could put his phone 13 in a special mode, which will always suppress notifications. That is probably not what most drivers would prefer. The most drivers prefer receiving notifications, but they have to be able to focus on driving only during critical and/or safety-relevant situations. The present disclosure enables this.

For example, according to the present disclosure, it makes more sense to only suppress/delay the output of notifications when the driver finds himself in a demanding (e.g., a critical and/or safety-relevant) driving situation, where a higher level of focus is required. According to the present disclosure, output of notifications in common routine driving and/or of notifications related to the (e.g., a critical and/or safety-relevant) driving situation may be permitted. The duration of a critical traffic situations may be typically short, while routine driving makes up a majority of the driving time. This disclosure allows the driver to receive notifications during most of the driving time, while preserving safety in the short-lived critical driving situations.

Further, the present disclosure permits the use of any one of well-known systems or devices 15 in the vehicle 10 for identifying critical and/or safety-relevant driving situations. Thus, any system and/or device 15 present in the vehicle 10 and utilizable for identifying critical and/or safety-relevant driving situations may be used according to the present disclosure. When the data processing apparatus 11 obtains from the system and/or device 15 an indication on presence of a corresponding (current) critical and/or safety-relevant driving situation, the data processing apparatus 11 may delay the output of notifications as described herein, for example, of notifications that are not related to the driving and/or that are not related to the driving situation. The distinguishing/determination whether or not a notification is related to the driving and/or whether or not a notification is related to the driving situation may be performed by the data processing apparatus 11, for example. The implementation of the distinguishing/determination may be performed in any one of appropriate ways.

The present disclosure allows consideration of different driving situations as corresponding (critical and/or safety-relevant) driving situations, in which delaying of notifications (e.g. of notifications that are not related to the driving and/or to the driving situation) may be useful. Some of the driving situations have already been exemplary mentioned above.

As indicated above, an example of a (critical and/or safety-relevant) driving situation, in which delaying of notifications (e.g., of notifications that are not related to the driving and/or to the driving situation) may be useful, may be a large (e.g., above a corresponding threshold) and/or growing relative velocity to another vehicle or to an object in front.

A relative velocity that is large, or growing rapidly, may be considered critical, for example, if the TTC/distance to the object is short enough (e.g., below a corresponding threshold). To correctly identify such situations, existing collision avoidance (CA) systems may be used for example as components and/or systems 16. For example, by using data from a CA system such as distance, relative velocity, TTC etc., the driving situation monitoring device 15 may detect (in real time) that the (current) driving situation is a critical one if at least one of the distance, relative velocity, TTC etc. is below a certain threshold level. The driving situation monitoring device 15 may then provide to the data processing apparatus 11 data indicative of the driving situation. The data processing apparatus 11 may then delay/suppress notifications (e.g., of notifications that are not related to the driving and/or to the driving situation). Here, the speed of the vehicle 10 could be a further factor for determination that the driving situation is critical one. The respective threshold levels may be adapted dependent on the circumstances. The skilled person, familiar with vehicle safety assurance systems, will be aware on how to determine the driving situation and on how to set and adjust the respective threshold values.

Further, as indicated above, an example of a (critical and/or safety-relevant) driving situation, in which delaying of notifications (e.g., of notifications that are not related to the driving and/or to the driving situation) may be useful, may be driving in a curve.

To detect curve driving, the driving situation monitoring device 15 may look at steering angle as well as lateral g-forces (yaw). If the steering angle is below a respective threshold and if lateral g-forces are below a respective threshold a (critical and/or safety-relevant) driving situation may be detected by the driving situation monitoring device 15. The skilled person is aware of the values of the steering angle and the lateral g-forces in curves and, hence, will be able to set and/or adjust appropriate respective threshold values. Further, also a more proactive detection algorithm/method may be used (e.g., in addition) that can detect not only when the vehicle 10 is already turning, but also when it is about to enter a curve that is in front of it. Corresponding algorithms/methods for curve detection are well known. For example, said algorithms/methods may involve or utilize a vision based algorithm and/or an AI algorithm that can take images from at least one forward looking camera and identify that there is a curve coming up. The advantage of using such algorithms/methods would be that the notifications suppression/delay can be applied even before the vehicle 10 is about to enter the curve, i.e. when the vehicle 10 is entering the critical situation. The detection of a (current) critical driving situation may comprise thus also a situation where a critical driving situation such as driving in curve is entered. Also entering a curve is safety-relevant and requires driver's attention. Furthermore, also map data may be used (e.g., separately or in addition) to detect the entering of a curve or driving in the curve as a corresponding (critical) driving situation.

Moreover, as indicated above, an example of a (critical and/or safety-relevant) driving situation, in which delaying of notifications (e.g., of notifications that are not related to the driving and/or to the driving situation) may be useful, may be intersections, junctions, highway on-ramps, and any one of similar driving situations. The detection of these situations is well known and is, therefore, not discussed in more detail.

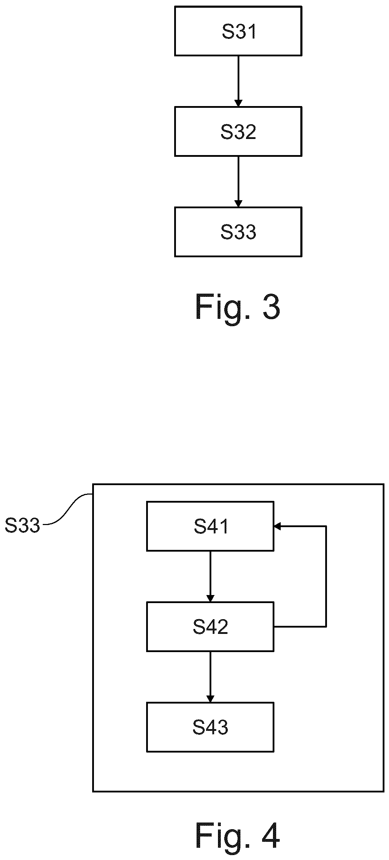

Figure 3 shows steps of a method for controlling an output of a notification to a driver of a vehicle 10 according to an example of the present disclosure. The steps of Figure 3 may be executed by the data processing apparatus 11.

According to Figure 3, in step S31, first data indicative of a notification to the driver of the vehicle 10 may be obtained (e.g., by the data processing apparatus 11), as described above. In step S32, second data indicative of a (current) driving situation (e.g., critical driving situation) is obtained. As described above, the driving situation monitoring device 15 may determine (e.g., in real time) that the (current) driving situation is critical one. Upon the determination, the driving situation monitoring device 15 may provide the second data to the data processing apparatus 11. In step S33, delaying of the output of the notification to the driver of the vehicle 10 may be executed based on the second data. The delaying of the output of the notification may be executed as described herein.

Figure 4 shows implementation of delaying output of a notification according to an example of the present disclosure. The steps shown in Figure 4 may be seen as sub-steps of the notification output delaying step S33 of Figure 3. Further, the steps of Figure 4 may be executed, for example, by the data processing apparatus 11.

In step S41, the delaying of the output of the notification to the driver of the vehicle 10 may be started. For example, step S41 may be performed depending on the way of implementation of the notification output delaying.

If, for example, the delaying S33 of the output of the notification comprises delaying by a predefined time period P, in step S41, a timeout corresponding to the predefined time period P may be set or a timer to count for the duration of the predefined time period P may be set, or a continuous comparison of a current time with the start time T1 or the end time T2 may be started. Any appropriate method of delaying by a predefined time period P may be implemented. If the delaying S33 of the output of the notification comprises inserting the notification in the queue 21, configured to maintain notifications for outputting to the driver of the vehicle 10, in step S41, the notification may be insert in the queue 21. The notification may be insert in the queue 21 at the end of the queue 21 as the last entry 20_k+1 of the queue 21.

In step S42, it is generally verified whether or not the delaying of the output of the notification should be continued.

In step 42, the delaying of the notification as started in step S41 is over. This may be the case, for example, when the predetermined time period P is over or the notification, inserted in the queue 21 in step S41 is now the first entry 20_1 and may be taken from the queue 21 for outputting.

In step S42, it may be further determined whether the current driving situation is a driving situation, which causes delaying S33 the output of the notification. This may be executed by using the driving situation monitoring device 15, which may determine the current driving situation.

For example, the diving situation monitoring device 15 may obtain (e.g., determine) data associated with the current driving situation. It may be then determined whether the current diving situation is the driving situation indicated in the second data obtained in step S32 or is another (e.g., critical) driving situation that causes delaying of notification output.

The result of the determination may be obtained by the data processing apparatus 11. If the result of the determination is positive, the delaying may be re-started and it may be proceeded with the execution of step S41.

Otherwise, if the current diving situation is not the driving situation indicated in the second data obtained in step S32 and is not another (e.g., critical) driving situation that causes delaying of notification output, the delaying of the output of the notification may be completed in step S43.

The diving situation monitoring device 15 may provide in step S42 to the data processing apparatus 11 third data indicating that the vehicle 10 is not in the driving situation indicated in the second data of step S32 and/or indicating that the driving situation indicated in the second data of step S32 is over. Upon obtaining the third data, the data processing apparatus 11 may complete the notification output delaying step S33 in step S43.

Thus, step S43 is a step of completing the delaying S33 of the output of the notification. Upon the completion of the notification output delaying step S33, the data processing apparatus 11 may cause the output of the notification by at least one output device or system 102 of the vehicle 10 that is arranged/appropriate for outputting the notification. Correspondingly, the at least one output device or system 102 of the vehicle 10 may output the notification.

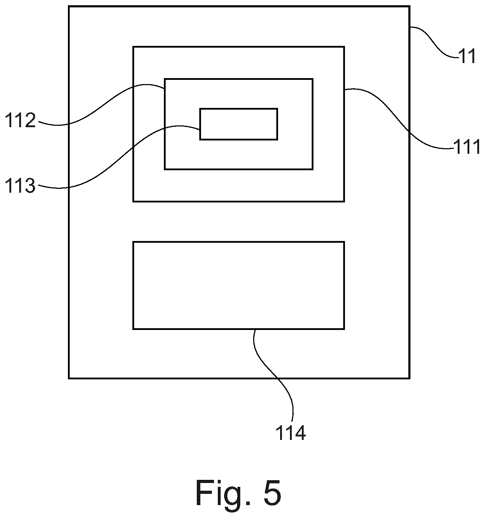

Figure 5 shows an arrangement of the data processing apparatus 11 according to an example of the present disclosure.

The data processing apparatus 11 comprises a data storage unit 111 and a data processing unit 114.

The data storage unit 111 comprises a computer-readable storage medium 112.

On the computer-readable storage medium 112, there is provided a computer program 113.

The computer program 113 and, thus, also the computer-readable storage medium 112, comprise instructions which, when executed by the data processing unit 114, or, more generally speaking, a computer, cause the computer or the data processing unit 114 to carry out the method for controlling the output of a notification to a driver of the vehicle 10 as described herein.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 101: at least one device or system of the vehicle
- 102: output device or system
- 11: data processing apparatus
- 111: data storage unit
- 112: computer-readable storage medium
- 113: computer program
- 114: data processing unit
- 12: device or system that is separate from the vehicle
- 13: mobile device
- 14: communication connection
- 15: driving situation monitoring device
- 16: components and/or systems inside and/or outside the vehicle
- T1: time point
- T2: time point
- P: time period
- 20_1, ..., 20_k, 20_k+1: entries of queue
- 21: queue
- S31: step of obtaining first data indicative of notification to vehicle's driver
- S32: step of obtaining second data indicative of a driving situation
- S33: step of delaying the output of the notification
- S41: step of starting delaying
- S42: step of verifying whether the delaying should be continued
- S43: step of completing the delaying

## Claims

1. A method for controlling an output of a notification to a driver of a vehicle (10), the method comprising:
- obtaining (S31) first data indicative of the notification to the driver of the vehicle (10);
- obtaining (S32) second data indicative of a driving situation; and
- based on the second data, delaying (S33) the output of the notification to the driver of the vehicle (10).

2. The method according to claim 1, wherein:
- the first data indicative of the notification is obtained (S31) from: a device or system (12) that is separate from the vehicle (10); a device or a system (101) of the vehicle (10) itself; or a mobile device (13); and/or
- the driving situation is a critical driving situation.

3. The method according to any one of the preceding claims, the method comprising obtaining (S42) third data indicating that the vehicle (10) is not in the driving situation indicated in the second data and/or indicating that the driving situation indicated in the second data is over.

4. The method according to claim 3, wherein:
- the output of the notification is caused upon obtaining the third data; and/or
- the delaying (S33) of the output of the notification to the driver of the vehicle (10) is completed (S43) upon obtaining the third data.

5. The method according to any one of the preceding claims, wherein:
- the delaying (S33) of the output of the notification comprises delaying it by a predefined time period; and/or
- the delaying (S33) of the output of the notification output comprises inserting the notification in a queue (21) configured to maintain notifications for outputting to the driver of the vehicle (10).

6. The method according to any one of the preceding claims, wherein:
- the method comprises monitoring driving situations of the vehicle (10);
- the monitoring of driving situations of the vehicle (10) comprises monitoring critical driving situations of the vehicle (10); and/or
- the monitoring of driving situations of the vehicle (10) comprises monitoring environment surrounding the vehicle (10) and/or monitoring at least one state of the vehicle (10) itself.

7. The method according to claim 6, wherein the monitoring of driving situations of the vehicle (10) is executed by using at least one of the following:
- information obtained from at least one sensor of the vehicle (10);
- information indicative of surrounding of the vehicle (10);
- information indicative of a driving route of the vehicle (10);
- information indicative of motion of the vehicle (10) relative to surrounding objects;
- information obtained from at least one system for detecting critical driving situations of the vehicle (10);
- information obtained from at least one system for collision avoidance;
- information indicative of driving state of the vehicle (10); and/or
- information obtained from cloud based map data.

8. The method according to claim 6 or 7, wherein the second data is a result of the monitoring of the critical driving situations.

9. The method according to any one of the preceding claims, wherein the second data indicative of a driving situation is obtained if:
- a longitudinal distance to an object in surrounding of the vehicle (10) is below a first threshold value and the vehicle (10) is driving;
- the longitudinal distance to an object in surrounding of the vehicle (10)is below a second threshold value and a driving speed of the vehicle (10) is above a third threshold value;
- a lateral distance to an object in surrounding of the vehicle (10) is below a fourth threshold value and the vehicle (10) is driving;
- the lateral distance to an object in surrounding of the vehicle (10) is below a fifth threshold value and the driving speed of the vehicle is above a sixth threshold value;
- the vehicle (10) is approaching an object with a relative velocity higher than a seventh threshold value and/or an estimated time-to-collision is below an eighth threshold value;
- the vehicle (10) is driving in a curve that involves steering with a steering angle above a ninth threshold value and/or yaw forces exceed a tenth threshold value;
- the vehicle (10) is about to enter, entering, or in the process of driving through a section of a road, requiring an adaptation of the speed of the vehicle (10) for entering or driving through the section of the road; and/or
- the vehicle (10) is driving a driving maneuver.

10. The method according to claim 9, wherein the adaptation of the speed of the vehicle comprises:
- increasing the speed of the vehicle (10);
- increasing the speed of the vehicle (10) by at least a first amount of speed;
- decreasing the speed of the vehicle (10); or
- decreasing the speed of the vehicle (10) by at least a first amount of speed.

11. The method according to claim 9 or 10, wherein the section of the road comprises: an intersection; a junction; an on-ramp; an off-ramp; a start of a traffic jam and/or a construction site on the road; an end of the traffic jam and/or the construction site on the road; or a curve of the road.

12. A data processing apparatus (11) comprising means for carrying out the steps of a method according to any one of the preceding claims.

13. A computer program comprising instructions which, when the program is executed by a computer, cause the computer to carry out the steps of a method according to any one of claims 1 to 11.

14. A computer-readable storage medium comprising instructions which, when executed by a computer, cause the computer to carry out the steps of a method according to any one of claims 1 to 11.

15. A vehicle (10) comprising a data processing apparatus (11) of claim 12.
